# EUROPEAN PATENT APPLICATION

(11) **EP 4 717 783 A1**
(43) Date of publication of application: **01.04.2026**
(21) Application number: 24203246.4
(22) Date of filing: 27.09.2024
(51) Int. Cl.: C22B 3/42, B01J 39/02, B01J 39/10, C22B 26/12, C02F 1/42

(54) **METHODS FOR REMOVING LITHIUM FROM LITHIUM COMPRISING SOLUTIONS**

(71) Applicant: VITO NV, 2400 Mol (BE)
(72) Inventor: MICHIELSEN, Bart, 2400 Mol (BE); VOGELSANG SUÁREZ, David Felipe, 2400 Mol (BE)
(74) Representative: AWA Benelux

(57) **Abstract**

The present invention relates to a method for removing lithium from a lithium comprising solution comprising contacting a lithium comprising solution with an adsorbent comprising an ion-exchange material comprising one or more of Ti, Mn and Zr, thereby obtaining a lithium comprising adsorbent and a lithium depleted solution, and contacting the lithium comprising adsorbent with an elution solution comprising a pH buffer solution configured to buffer the pH of the elution solution at a value between 1.5 and 7, thereby eluting the lithium from the lithium comprising adsorbent into the elution solution, thereby obtaining a lithium comprising elution solution and the adsorbent.

## Description

### Technical field

The present invention is related to methods for recovering lithium from lithium comprising solutions, such as geothermal brines and alkaline liquors.

### Background art

The global shift towards clean energy technologies has driven an unprecedented increase in the demand for secondary batteries, and in particular lithium based batteries such as Li-ion batteries, because of the distinctive electrochemical properties of lithium. Currently, lithium is primarily extracted from two sources: hard-rock mineral deposits, mainly spodumene, and subterranean brines. Brine extraction involves pumping lithium rich solutions to the surface for evaporation, whereas hard-rock mining processes ore to extract lithium compounds.

The use of evaporation ponds for lithium extraction faces significant environmental and operational challenges. Vast quantities of water are lost due to evaporation, placing a strain on water resources in often arid regions. Additionally, leaks and contamination pose risks to groundwater. The slow nature of evaporation-based processes, sometimes taking years, limits production flexibility, while reliance on weather conditions adds uncertainty.

To address these limitations, direct lithium extraction (DLE) techniques offer a potentially more sustainable approach. Direct lithium extraction methods, including adsorption, ion-exchange, and solvent extraction, aim to extract lithium directly from brines with a smaller environmental footprint and a reduced water usage.

DLE via ion-exchange uses adsorbent materials comprising an ion-exchange material. Titanium (Ti) comprising ion-exchange materials, in particular protonated titanate (H₂TiO₃, abbreviated as HTO), have emerged as promising ion-exchange material candidates due to the high affinity of Ti for lithium (Li) ions. Protonated titanate is synthesized by exchanging the lithium cation (Li⁺) for the hydrogen cation (H⁺) in lithium titanate (Li₂TiO₃, abbreviated as LTO). H₂TiO₃ and Li₂TiO₃ are typically a particulate material (i.e. a powder), and can be shaped into spheres and fibers, and can even be 3D-printed into monoliths, often with the aid of binders like polyvinyl chloride. Alternatively, H₂TiO₃ and Li₂TiO₃ can be used as composite materials, by incorporating them into carrier materials, for example carrier materials comprising polyvinyl butyral or poly(ethylene-co-vinyl alcohol).

A major drawback in using H₂TiO₃ is the leaching of Ti during Li adsorption cycles, which impacts the structural integrity and the functioning of this ion-exchange material, thereby limiting the possibility to reuse the adsorbent material comprising HTO and thus its lifetime. Prior art solutions to Ti leaching include optimized synthesis methods, the use of specific precursors (e.g., LiC₂H₃LiO₂·2H₂O, LiOH, or Li₂CO₃) and surface functionalization techniques like silanization. These advancements have successfully reduced Ti losses and have improved the selectivity of the adsorbents towards lithium.

Further, efficient desorption of lithium from such ion-exchange material comprising adsorbents (thus after removal of lithium from a liquid feed by adsorption), to recover the adsorbent without structural degradation, allowing its reuse, remains a critical step in achieving a commercially viable and sustainable process. This desorption is typically performed by exchanging the adsorbed Li ions with protons (H⁺). Prior art desorption methods often involve the use of strong acids, such as hydrochloric acid (HCl) or sulfuric acid (H₂SO₄). While these methods are efficiently desorbing lithium, they present several drawbacks including increased operating costs due to acid consumption and potential environmental concerns related to acid waste disposal. Further, Ti leaching degrades the adsorbent structure which limits their lifetime and contaminates the desorbed Li, raising environmental concerns due to the toxicity of the Ti leached. This reduces the sustainability of the entire process. Consequently, adsorbent structure degradation further often necessitates more complex processes to reduce environmental impact, leading to complex and expensive processes.

EP4116447 discloses a method for producing a lithium (Li)-comprising solution by contacting a Li adsorbent obtained from lithium manganese oxide with a low Li-comprising solution, thereby adsorbing the Li from the solution, and then eluting the adsorbed Li by contacting the adsorbent with an acid-comprising elution solution to obtain an eluted solution comprising Li. Advantageously, the acid, for example HCl, is added to the elution solution such that the hydrogen ion concentration of the elution solution is between 0.1 mol/L and 4.0 mol/L. Fresh acid is added to the elution solution during the eluting step to maintain a low pH, which keeps the eluting reaction going. The method further comprises oxidating manganese by adding an oxidant and a pH adjuster to the eluted solution, the latter adjusting the pH to between 3 and 7, to obtain a Li-comprising eluted solution with a suppressed manganese concentration.

US2024/018008 discloses a process for extracting lithium from liquid resources by contacting a chemical additive with the liquid resource, a wash solution comprising an ion-exchange material, an acidic solution or any combination thereof, contacting the ion-exchange material with the liquid resource such that the ion-exchange material absorbs lithium ions from the liquid resource. The process also comprises a step of contacting the acidic solution with the lithiated ion-exchange material, wherein the absorbed lithium is released into the acidic solution to yield a lithium eluate. The ion-exchange material comprises one or more of iron, manganese, titanium, tin, aluminium, copper, vanadium or silicon. The acidic solution comprises hydrochloric acid, sulfuric acid, nitric acid, phosphoric acid, hydrobromic acid, hydroiodic acid, perchloric acid, acetic acid, or a combination thereof, and has a concentration of less than 10 M, preferably less than 5 M or less than 1.0 M.

The foregoing methods include the use of relatively high concentrations of strong acids such as HCl and H₂SO₄ to ensure a good elution of the adsorbed lithium from the adsorbent. A disadvantage thereof is that the presence of such strong acid-based elution solutions causes degradation of the adsorbent (in particular the ion exchange material), in particular due to leaching of for example manganese into the elution solution. Consequently, additional process steps are required to limit this leaching, or to remove any leached metals other than Li from the elution solution, thereby rendering the prior art methods complex, expensive and not sustainable. Further, such structural modifications damage the adsorbents and thereby limit their lifetime, leading to even less sustainable processes.

### Summary of the invention

The present invention aims to overcome one or more of the above drawbacks. It is an aim to provide methods for extracting lithium (Li) from lithium comprising solutions, wherein the methods are more sustainable compared to prior art processes, i.e. having a lower environmental footprint. It is a further aim to provide methods capable of excellent lithium recovery (i.e. lithium recovery at a high yield) while using adsorbent materials having an excellent stability and integrity which may be maintained over multiple cycles. In other words, it is an aim to provide methods using adsorbents having an improved lifetime, in other words, that can be reused longer, i.e. multiple times, for example at least 500 times, when compared to prior art methods and adsorbent materials.

Another aim is to provide adsorbents that have a high selectivity to Li, allowing its removal (i.e. extraction) at high rates while other metals in the initial Li comprising solution are not extracted in the lithium extraction process.

Yet another aim of the invention is to provide processes that allow to reduce the use of acids, in particular acids having a pH between 1 and 3, when compared to prior art methods. A further aim is to provide processes that allow the reuse of the elution solutions, in addition to the reuse of the adsorbents, for multiple cycles.

It is a further aim to contribute to the development of economically viable processes for lithium recovery from a wide variety of liquid feeds, the processes showing an excellent selectivity for lithium removal.

In the light of the present invention, the terms "recovery", "removal" and "extraction" are used interchangeably to indicate the removal of lithium from the solutions and adsorbents comprising lithium.

According to a first aspect of the present disclosure, there is provided a method for removing lithium from a lithium comprising solution as set out in the appended claims.

The method for removing lithium from a lithium comprising solution comprises an adsorption step and a desorption step.

The adsorption step comprises contacting a lithium comprising solution with an adsorbent comprising an ion-exchange material, thereby obtaining a lithium comprising adsorbent and a lithium depleted solution, wherein the ion-exchange material comprises one or more of Ti, Mn and Zr.

The desorption step comprises contacting the lithium comprising adsorbent with an elution solution comprising a pH buffer solution, thereby eluting the lithium from the lithium comprising adsorbent into the elution solution, thereby obtaining a lithium comprising elution solution and the adsorbent,

The pH buffer solution is configured to buffer the pH of the elution solution at a value between 1.5 and 7, preferably between 2 and 6, more preferably between 2.5 and 4.5, most preferably between 3 and 4.

Advantageously, when the ion-exchange material comprises Ti, it comprises or substantially consists of one or more of HTiO₂, H₂TiO₃, H₄Ti₅O₁₂, H₄TiO₄, H₇Ti₁₁O₂₄,

Advantageously, when the ion-exchange material comprises Zr, it comprises or substantially consists of one or more of H₂ZrO₄, H₂ZrO₃ or H₂ZrO₆.

Advantageously, when the ion-exchange material comprises Mn, it comprises or substantially consists of one or more of HMnO₄, HMn₂O₄, H₂MnO₄ or H₂MnO₃.

Additionally, the ion-exchange material is advantageously doped with one or more of MgO, Y₂O₃, CaO and Ce₂O₃.

Advantageously, the pH buffer solution comprises protons (H⁺). Advantageously, the molarity of the protons in the pH buffer solution is equal to or higher than 0.001, preferably equal to or higher than 0.01, more preferably equal to or higher than 0.05, most preferably equal to or higher than 0.1 mole H⁺/L pH buffer solution. Advantageously, the molarity of the protons in the pH buffer solution is equal to or lower than 5.0, preferably equal to or lower than 3.0, more preferably equal to or lower than 2.5, most preferably equal to or lower than 2.0 mole H⁺/L pH buffer solution.

Advantageously, the pH buffer solution is an acidic pH buffer solution. Advantageously, the acidic pH buffer solution comprises or substantially consists of one or more of a hydrochloride, a phosphate, a sulphate, a carbonate, an acetate, and a citrate, or any other compound considered suitable by the skilled person.

The method of this invention is suitable for use with various physical forms of the adsorbent. Advantageously, the adsorbent is a particulate material. The methods of the invention are not limited to the shape and the size of the adsorbent. The skilled person will be capable of selecting the appropriate size and shape depending on the physical form of the adsorbent and the intended application, such as the volume of the Li comprising solution.

When the adsorbent is a particulate material, the particles are advantageously substantially spherical of shape. Advantageously, and in particular for spherically shaped adsorbents, the particles have an average size equal to or lower than 5 mm, preferably equal to or lower than 2.5 mm, more preferably equal to or lower than 2 mm, more preferably equal to or lower than 1 mm, as measured by optical microscopy according to standard ASTM F1877-16. It is generally known that smaller particles result in faster kinetics of Li adsorption/desorption.

Advantageously, the adsorbent comprises a carrier material, wherein the ion exchange material is dispersed within the carrier material. For example, the carrier material can be a porous structure, wherein the ion exchange material is homogeneously provided at the internal and external surfaces of the carrier material.

Advantageously, the carrier material is a polymer, preferably a water insoluble polymer. Examples of suitable water insoluble polymers include, without being limited thereto, hydrophilic polyacrylonitrile, polyvinyl butyral, polyvinyl chloride, polyurethane, polyimides, polysulfone, polysulfone ether.

Alternatively, yet advantageously, the carrier material is an inorganic material, preferably a water insoluble inorganic material. Examples of suitable water insoluble inorganic materials include, without being limited thereto, a clay mineral, titanium dioxide, zirconium dioxide, silica and alumina.

Advantageously, when the adsorbent comprises a carrier material, wherein the weight ratio of the ion-exchange material to the carrier material is between 1:1 and 15:1, preferably between 1:1 and 12:1, more preferably between 1:1 and 10:1, for example 3:1, 4:1 or 9:1.

The pH of the lithium comprising solution may be adjusted before or during lithium recovery therefrom (i.e. before or during the adsorption step), advantageously to an alkaline environment, i.e. a pH of at least 7. It is known that an alkaline environment allows to optimize adsorption of lithium ions by the adsorbent. Such an adjustment is particularly suitable for lithium comprising solutions having a pH of below 7. The pH may be adjusted by means known in the art. Advantageously, in the present disclosure, the pH of the lithium comprising solution is adjusted by adding an alkaline pH buffer solution to the lithium comprising solution. Such an alkaline pH buffer solution provides an excess of OH⁻, thereby maintaining the pH of the lithium comprising solution equal to or higher than 7.

Advantageously, the elution solution comprises an acid having a pH between 1 and 3. Alternatively, yet advantageously, the elution solution comprises an acid having a pH higher than 3 and equal to or lower than 6.

The inventors have surprisingly discovered that the method for removing lithium from a lithium comprising solution according to this invention presents the advantage that the degradation of the adsorbent is substantially reduced, as a result of which the adsorbent can be re-used more often. The reduced damage to the adsorbent is owed to the reduced leaching of titanium, manganese or zirconium from its structure, which is believed to be achieved thanks to the pH buffer solution. More specifically, this is a result of the synergistic effect of a number of factors, including the composition of the adsorbent, in particular the ion exchange material, as well as the presence of the pH buffer solution in the elution solution. The pH buffer solution allows for the concentration and/or the amount of acids in the elution solution to be reduced, while at the same time still obtaining highly efficient and selective Li recovery in the desorption step. The presence of the pH buffer has the effect that the pH increase of the elution solution during lithium desorption may remain limited. This has the additional advantage that also the elution solution may be reused multiple times.

### Brief description of figures

Aspects of the invention will now be described in more detail with reference to the appended drawings, wherein same reference numerals illustrate same features and wherein:
Figure 1 shows the lithium adsorption kinetics and the lithium desorption kinetics, in function of time, for two reference elution solutions and one inventive elution solution.
Figure 2 shows the percentage of titanium leached in function of time, for two reference elution solutions and one inventive elution solution.
Figure 3 shows the percentage of titanium leached in function of time, for one reference elution solution and one inventive elution solution.
Figure 4 shows the adsorption capacity of the hydrogen titanate (HTO) beads in function of the number of adsorption-desorption cycles, when used with five reference elution solutions and two inventive elution solutions.
Figure 5 shows the lithium recovery capacity in function of the number of adsorption-desorption cycles, when used with five reference elution solutions and two inventive elution solutions.
Figure 6 shows the accumulated titanium dissolution in function of the number of adsorption-desorption cycles, when used with five reference elution solutions and two inventive elution solutions.

### Description of embodiments

The methods of the present invention comprise an adsorption step and a desorption step. During the adsorption step, lithium from a lithium comprising solution is extracted (removed) and adsorbed by an adsorbent comprising an ion exchange material. During the desorption step, the adsorbed lithium is removed (desorbed) from the adsorbent into an elution solution comprising a pH buffer solution, thereby recovering the adsorbent, which can then be reused in a subsequent adsorption step.

The lithium comprising solution used in the adsorption step may originate from a wide variety of sources. Non-limiting examples include a natural brine, a pretreated brine, a concentrated brine, a processed brine, a synthetic brine, a geothermal brine, a dissolved salt flat, seawater, concentrated seawater, a desalination effluent, an oilfield brine, a liquid resulting from an ion exchange process, a liquid from a solvent extraction process, a leachate from an ore or combination of ores, a leachate from a mineral or combination of minerals, a leachate from a clay or combination of clays, a leachate from recycled products, a leachate from recycled materials, a mother liquor, or combinations thereof.

Advantageously, the lithium comprising solution is an aqueous solution. Optionally, the aqueous solution can comprise one or more organic solvents or dissolved organic components.

The lithium comprising solution may optionally be pre-treated prior to contacting with the adsorbent to remove impurities, for example suspended solids or organic molecules. Impurities can be removed by methods known in the field, such as by filtering. Alternatively or additionally, the pH of the lithium comprising solution may optionally be adjusted to alkaline, i.e. to a pH equal to or higher than 7.

An advantage of the methods of the present invention is that lithium comprising solutions with a wide range of Li content can be treated efficiently. The Li content of the lithium comprising solution may be, without being limited thereto, between 1 mg/L and 15 g/L, preferably between 20 mg/L and 10 g/L, more preferably between 50 mg/L and 5 g/L, most preferably between 50 mg/L and 3 g/L.

The lithium comprising solution, besides Li, may comprise one or more from the list of transition metal hydroxides, oxy-hydroxides, sulfides, flocculants, aggregates, agglomerates, or combinations thereof. Advantageously, the lithium comprising solution comprises one or more of Na, K, Rb, Cs, Fr, Be, Mg, Ca, Sr, Ba, Ra, Sc, Y, Ti, Zr, Hf, V, Nb, Ta, Cr, Mo, W, Mn, Tc, Fe, Fe, Ru, Os, Co, Rh, Ir, Ni, Pd Pt, Cu, Ag, Au, Zn, Cd, Hg, B, Al, Ga, In, Si, Ge, Sn, Pb, As, Sb, Bi, Se, Te, Po, Br, I, At.

If the lithium comprising solution comprises one or more of the foregoing elements, in particular one or more of Mg, Ca, Sr, Ba, Fe, and Mn, these can be present, individually, at a concentration between 0.01 mg/L and 150 g/L, preferably between 1 mg/L and 100 g/L.

The lithium comprising solution used in the method of this invention can have a temperature between -20 and 400 degrees Celsius, preferably between 20 and 200 degrees Celsius, more preferably between 25 and 100 degrees Celsius, most preferably between 50 and 100 degrees Celsius, prior and/or during the adsorption step. Advantageously, at standard pressure conditions, the lithium comprising solution has a temperature between 0 and 100 degrees Celsius, preferably between 25 and 100 degrees Celsius, more preferably between 50 and 100 degrees Celsius. It will be understood that at higher pressure conditions, the lithium comprising solution can have a higher temperature. In particular, when the lithium comprising solution is an aqueous solution, the adsorption step is performed at a temperature and pressure that maintain the lithium comprising solution in a liquid state, thereby avoiding the water in the solution to solidify or to evaporate.

The adsorbent comprises an ion-exchange material (IEM). In other words, the adsorbent comprises chemical compounds capable of exchanging ions, in particular lithium ions (Li⁺), with hydrogen ions (protons, H⁺). In other words, the adsorbent comprises H⁺ which can be exchanged for, for example, the Li⁺ of the lithium comprising solution. Advantageously, the IEM allows for selective uptake of lithium, i.e. advantageously does not take up other metals or metal ions such as sodium, potassium, magnesium, and any other metal ions that may be present in the lithium comprising solution. In the light of the present invention, the term "uptake", and "adsorption" are used interchangeably.

Advantageously, the IEM comprises one or more of Ti, Zr, Mn, Sb, Cu, Sn, Fe, and Al, preferably one or more of Ti, Zr, and Mn, more preferably Ti and/or Zr, most preferably Ti. Non-limiting examples of IEMs particularly suitable for use with the methods of the invention include HTiO₂, H₂TiO₃, H₄Ti₅O₁₂, H₄TiO₄, H₇Ti₁₁O₂₄, H₂ZrO₄, H₂ZrO₃, H₂ZrO₆, Li₂Si₃O₇, HMnO₄, HMn₂O₄, H₂MnO₄ or H₂MnO₃. It will be understood that a combination of two or more of the foregoing IEMs can also be used. When two or more IEMs are used, they can be comprised in a single adsorbent, or a plurality of adsorbents can be used.

During the adsorption step, more particularly during contacting the IEM comprised in the adsorbent with the lithium comprising solution, one or more of the hydrogen ions of the IEM are exchanged for lithium ions of the lithium comprising solutions, wherein the lithium is adsorbed by the IEM. Therefore, although the structure of the IEM is expressed with discrete stoichiometries, it will be understood that it is possible that not all hydrogen ions of the IEM are exchanged for lithium ions. This depends, amongst others, on the amount of lithium in the lithium comprising solution and the amount of hydrogen ions in the IEM. Consequently, variable amounts of both lithium ions and hydrogen ions can be comprised in the ion exchange material at the end of the adsorption step.

Advantageously, the lithium adsorbent comprising an ion exchange material is a particulate material. Alternatively, yet advantageously, the adsorbent can be an extrudate, a foamed material, or a three dimensional (3D) porous monolith. Advantageously, the foamed material is an open cell foamed material, allowing the Li comprising solution to reach also the internal surface of the foamed material. 3D porous monoliths can for example be obtained by additive manufacturing, such as 3D-printing, or extrusion.

Advantageously, the adsorbent, for example the adsorbent particles, can comprise a coating. Non-limiting examples of particularly suitable coatings are coatings comprising SiO₂, TiO₂, ZrO₂, polyvinylidene difluoride, polyvinyl chloride, polystyrene, polybutadiene, polydivinylbenzene, or combinations thereof.

During the desorption step, an elution solutions comprising a pH buffer solution is used to elute the adsorbed lithium from the lithium adsorbent comprising an ion exchange material. During the elution, the lithium ions of the adsorbent are exchanged for hydrogen ions (i.e. protons) in the elution solution, thereby obtaining an eluate, i.e. a lithium enriched solution, and recovering the initial adsorbent comprising hydrogen ions, i.e. the adsorbent used during the adsorption step.

Advantageously, the elution solution is an aqueous solution having a pH between 1.5 and 7, preferably between 2 and 6. It is known that when the elution solution has a pH higher than 7, and, depending on the composition of the elution solution, even a pH higher than 6 and in some cases even higher than 4.5, Li desorption will compete with Li adsorption, leading to an inferior desorption efficiency. It is also known that when the pH of the elution solution is lower than 1.5, or even lower than 2, the acidity is so high that the Ti, Zr or Mn leaches from the ion exchange materials contacted with the elution solution, leading to IEM degradation (i.e. structural damage or disintegration).

Advantageously, the elution solution comprises an acid in an amount to ensure that the elution solution has a predetermined/preset pH, advantageously a pH between 1.5 and 7, preferably between 2 and 6. Advantageously, the acid is an acid having a pH between 1 and 3. Non-limiting examples of such acids include sulfuric acid, hydrochloric acid, nitric acid, phosphoric acid etc. Alternatively or additionally, yet advantageously, the acid is an acid having a pH higher than 3 and equal to or lower than 6. Non-limiting examples of such acids include organic acids such as acetic acid, citric acid, formic acid. It will be understood that the concentration of the acid(s) in the elution solution depends on the required pH of the elution solution and on the acidity and nature of the acid(s).

The pH buffer solution is configured to buffer the pH of the elution solution. Advantageously, the pH buffer solution buffers the pH of the elution solution at a value between 1.5 and 7, preferably between 2 and 6, more preferably between 2.5 and 4.5, most preferably between 3 and 4. The inventors have discovered that the inventive elution solutions comprising a pH buffer solution are capable of desorbing Li at a stable pH. This excludes the need to add further acid(s) to the elution solution during the Li desorption to keep the pH constant, the latter being the case with prior art elution solutions. In addition, the inventors have surprisingly discovered that efficient Li desorption is possible at pH values that are higher than typical pH values of prior art elution solutions, which reduces the leaching of the Ti, Zr or Mn, thereby significantly reducing degradation of the IEM and thus of the adsorbent comprising the IEM. Without wishing to be bound by any theory, the inventors believe that a stable and higher pH for the elution solution is obtained by the fact that the pH buffer solution acts as an abundant source of hydrogen ions (protons).

Advantageously, the molarity of protons in the pH buffer solution is equal to or higher that 0.01, preferably equal to or higher than 0.05, more preferably equal to or higher than 0.1 mole H⁺/L pH buffer solution.

Examples of suitable pH buffer solutions include phosphate buffers, acetate buffers, citrate buffers, a solution of sodium chloride and sodium hydroxide or disodium hydrogen phosphate/potassium dihydrogen phosphate, or sodium acetate.

Phosphates used in phosphate buffers include anions, salts, functional groups or esters derived from a phosphoric acid. Non-limiting examples include trisodium phosphate, calcium phosphate, ammonium phosphate, sodium hexametaphosphate, dicalcium phosphate dehydrate.

Acetates used in acetate buffers are salts formed by the combination of acetic acid with a base. Non-limiting examples include ammonium acetate, methyl acetate, bromoacetic acid, sodium acetate, aluminium acetate, ethyl acetate.

Citrates used in citrate buffers are salts or esters of citric acid. Non-limiting examples include sodium citrate, calcium citrate, potassium citrate, magnesium citrate, triethyl citrate, tributyl citrate, acetyl triethyl citrate and others.

The methods of the invention can be performed using apparatuses known in the art of Li removal through the use of IEMs. A particularly preferred apparatus for carrying out the removal of lithium from a lithium comprising solution is an ion exchange reactor, with alternating flows of lithium comprising solutions and inventive elution solutions, being flowed through the ion exchange column to achieve lithium adsorption and desorption.

### Examples

### Example 1

Adsorbent beads comprising an ion-exchange material were prepared by first manufacturing beads comprising low molecular weight polyvinyl chloride (PVC) and lithium titanate (Li₂TiO₃, abbreviated as LTO). The LTO/PVC beads were prepared by a solvent antisolvent granulation methodology. First, PVC was solubilized in N-methyl pyrrolidone (NMP). In parallel LTO was ball milled with water and 5 mm diameter zirconium (Zr) spheres, using a planetary ball mill (Retsch-PM 400) at 200 rpm in two cycles of 5 minutes each. The resulting slurry was frozen with liquid nitrogen and was subsequently freeze dried. The resulting LTO was then incorporated into the PVC-NMP solution in amounts so that the resulting mixture comprised 22.5 wt.% of LTO, 5.64 wt.% PVC and 71.84 wt.% NMP. The mixture was then homogenized and dripped in water, using a nozzle with an opening of 600 µm. The water comprised some drops of a standard detergent to help reduce the surface tension, which contributed to the formation of solid spheres rather than solid discs. Upon dripping the mixture in the water with detergent, the droplets solidified immediately. The spheres were washed multiple times to remove the NMP.

The LTO/PVC beads were then subjected to an acid treatment to convert the LTO in H₂TiO₃ (abbreviated as HTO), so as to obtain HTO/PVC adsorbent beads comprising HTO as ion-exchange material. In an example, the LTO/PVC beads were immersed in a 0.2M HCl solution with a LTO-to-liquid ratio of 10 g/L. The mixture was kept at 30 °C for 24 hours to replace Li ions were replaced by H ions during an ion exchange process, thereby thus converting LTO into HTO. The resulting HTO/PVC beads were thoroughly rinsed with deionized (DI) water until a neutral pH was reached. Afterwards, they were stored in DI water. It is clear to the skilled person that other ratios, for example higher ratios, of LTO-to-liquid can be used, as well as other temperatures if an acid buffer is applied.

To test the lithium adsorption/desorption kinetics, 300 HTO/PVC beads comprising 520 mg of HTO were added to 100 mL of a 100 ppm Li⁺ solution prepared with LiCI and left for 30 hours to adsorb the Li of the Li comprising solution by the HTO/PVC beads. Solution aliquots of 1 mL were collected at various times to evaluate the Li content in the solution, which allowed to evaluate the adsorption kinetics. After 30 hours, the beads were removed, washed four times with deionized water, and then immersed for 30 hours in 100 mL of three different elution solutions having a composition as shown in Table 1 to desorb the lithium. Elution solution aliquots of 1 mL were collected for each elution solution at different times to evaluate the Li content in the elution solution, which allowed to evaluate the desorption kinetics.

The lithium concentration in the lithium comprising solution and in the elution solution was measured on the collected 1 mL aliquots by inductively coupled plasma optical emission spectroscopy (ICP-OES), using an 5100 ICP-OES instrument.

**Table 1. Elution solutions composition in the desorption kinetics experiment.**

| **Name** | **Composition** |
|---|---|
| Inventive 1 | 0.1 M HCl solution buffered to pH 3.5 with ammonium acetate |
| Reference 1 | 0.1 M HCl (pH 1) |
| Reference 2 | 0.01 M HCl (pH 2) |

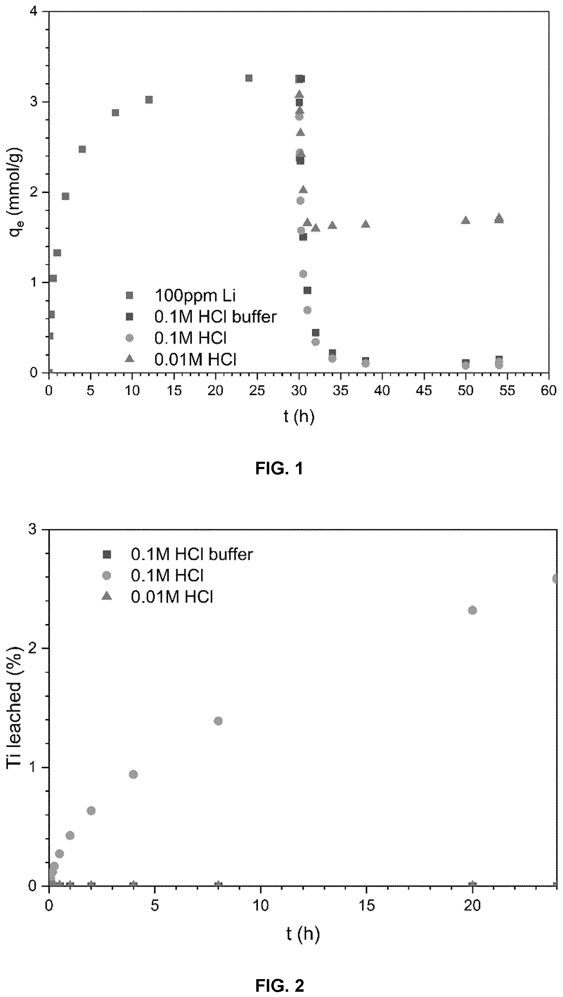

Fig. 1 shows the lithium adsorption kinetics (time up to 30 hours) and the lithium desorption kinetics (time from 30 hours to 60 hours), expressed as the adsorption capacity at equilibrium (qe) in function of the time. Comparing the lithium desorption kinetics of reference elution solutions Reference 1 and Reference 2, it is clear that a faster and higher Li desorption is obtained with a more concentrated HCl solution, which provides a higher concentration of protons to the elution solution. For the reference elution solutions, a higher proton concentration means an elution solution with a lower pH.

When comparing the desorption kinetics of the Inventive 1 and Reference 1 elution solutions, no significant differences in desorption kinetics were observed, although the Li desorption with Inventive 1 took place at a pH 3.5, which was even higher than the pH of Reference 2 (pH 2). So by using the inventive elution solutions, it is possible to obtain Li desorption kinetics similar to those of the elution solution without the pH buffer solution (thus having a same concentration of acid and the same acid, in this case 0.1 M HCl), while working at a higher pH value. Without wishing to be bound by any theory, the inventors believe that this effect can be contributed to the abundant concentration of protons provided by the pH buffer solution to the elution solution. The Li desorption kinetics in general, considering all three elution solutions, thus seem to depend mainly on the proton concentration in the elution solution.

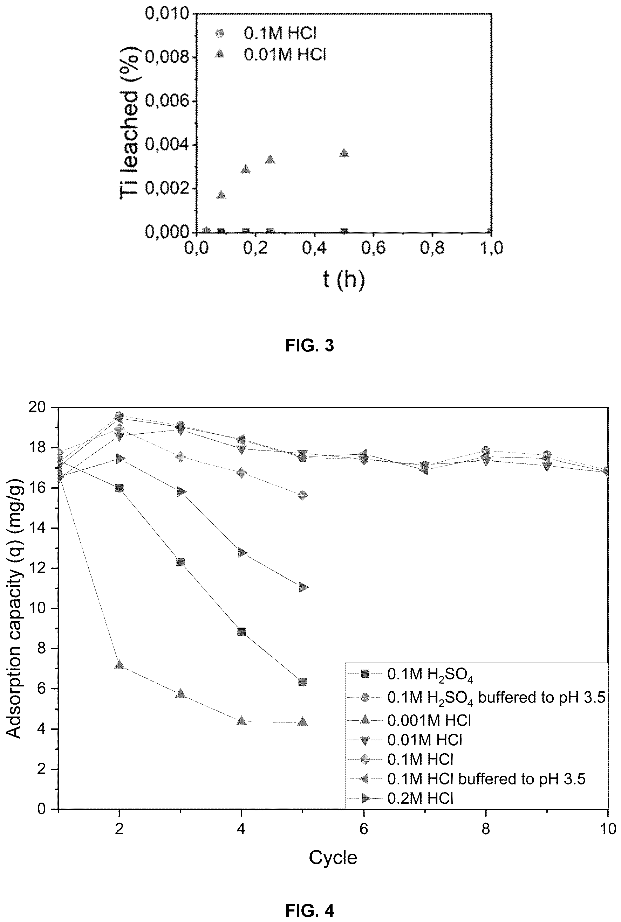

Fig. 2 shows the titanium leaching in function of desorption time (hour 30 in Fig. 1 equals hour 0 in Fig. 2) for each of the three elution solutions, by measuring the amount of Ti in the elution solution. Fig. 3 shows in detail the Ti leaching results of Fig. 2 for the first hour for the Reference 2 and Inventive 1 elution solutions. The titanium concentration in the elution solution as a function of desorption time was measured by inductively coupled plasma optical emission spectroscopy (ICP-OES), using an 5100 ICP-OES instrument, on aliquots of the elution solutions collected at different time intervals.

The results show a significant and continuous leaching of Ti from the LTO/PVC beads in the presence of the Reference 1 elution solution (Fig. 2). Ti leaching, albeit less significant, was also observed with the Reference 2 elution solution (Fig. 3), while no Ti leaching (i.e. below the detection limit) was observed with the Inventive 1 elution solution (Figs. 2 and 3). From the Ti leaching results, it follows that Ti leaching depends on the pH of the elution solution - a higher pH resulting in a lower Ti leaching, with no leaching at pH 3.5 (Inventive 1 elution solution) - rather than on the proton (H⁺) concentration.

From the combination of the Li desorption and Ti leaching results, it follows that for the reference elution solutions a high Li desorption goes hand in hand with a high Ti leaching, and thus to degradation of the adsorbent structure. However, only with the inventive elution solution, it is possible to have a high Li desorption efficiency will preventing Ti leaching.

### Example 2

30 HTO/PVC beads manufactured as described in Example 1 and comprising 52 mg of HTO were added to 20 mL of synthetic brine comprising 100 ppm of Li⁺ and equimolar concentrations of Ca⁺, Na⁺, K⁺, Ba⁺, and Mg⁺. The HTO/PVC beads were contacted with the brine for five hours to adsorb the Li of the synthetic brine, followed by four washes with deionized water. Afterwards, the beads were contacted with an elution solution for 17 hours to desorb the Li. This adsorption/desorption cycle was repeated five to ten times using five reference elution solutions and two inventive elution solutions having a composition as shown in Table 2. Each Li adsorption step was performed with fresh synthetic brine. The amount of Li in the synthetic brine and in each elution solution was measured at the end of the adsorption and desorption step, respectively, and was measured as explained in Example 1.

**Table 2: Elution solutions composition**

| **Name** | **Composition** |
|---|---|
| Reference 1 | 0.1 M H₂SO₄ (pH 1) |
| Reference 2 | 0.001 M HCl (pH 3) |
| Reference 3 | 0.01 M HCl (pH 2) |
| Reference 4 | 0.1 M HCl (pH 1) |
| Reference 5 | 0.2 M HCl (pH 0.5) |
| Inventive 1 | 0.1 M H₂SO₄ solution buffered to pH 3.5 with ammonium acetate |
| Inventive 2 | 0.1 M HCl solution buffered to pH 3.5 with ammonium acetate |

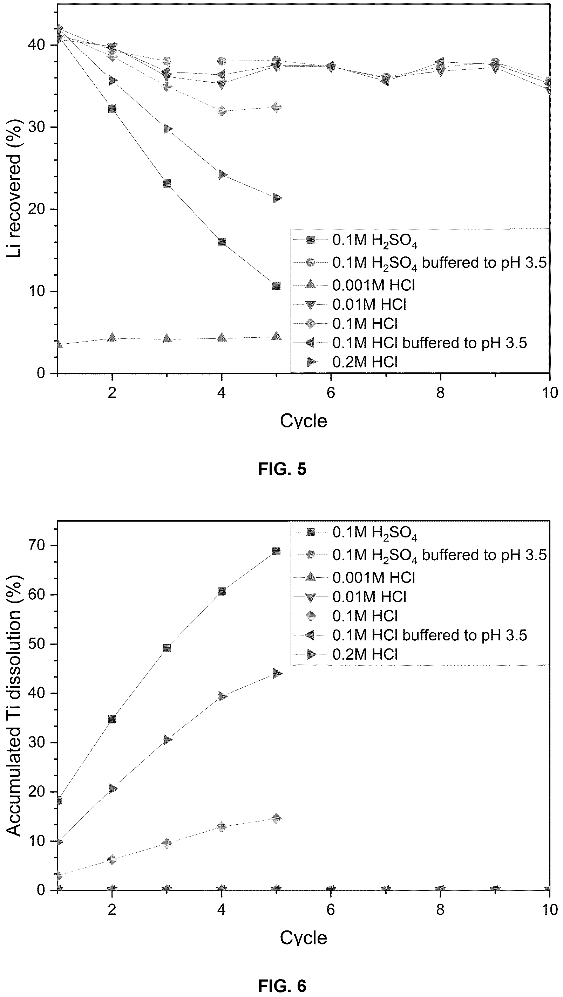

Fig. 4 shows the Li adsorption capacity of the HTO/PVC beads, in mg of Li adsorbed per g of HTO/PVC beads. Fig. 5 shows the Li recovery (desorption) capacity measured in % of Li in the elution solution at the end of 17 hours desorption time. Only the inventive elution solutions and the Reference 3 elution solution are capable to maintain both a constant Li adsorption and a constant Li recovery capacity up to ten cycles. The Reference 2 elution solution shows a stable, but very low Li recovery, which can be contributed to the low amount of protons in this elution solution, leading to a lower Li adsorption from the synthetic brine. As the concentration of H⁺ which originate from HCl is low (0.001M), not all the Li⁺ adsorbed will be desorbed. A portion of the Li⁺ will be desorbed into the elution solution and a portion will remain in the sorbent. In the next cycle the adsorbent will adsorb Li⁺ by the fraction exchanged by H⁺ and during desorption with the 0.001M HCl part of the Li⁺ will be recovered. This adsorption and desorption of Li⁺ and H⁺ exchange is repeated cycle after cycle until stability is reached.

The other reference elution solutions, namely Reference 1, 4 and 5 showed a Li adsorption capacity and a Li recovery capacity that decreased dramatically over the first five cycles.

Fig. 6 presents the accumulated Ti leached (expressed in %) from the adsorbent beads in function of their reuse in repeated adsorption/desorption cycles. The results show a high and continuous leaching of Ti in the Reference 1, Reference 4 and Reference 5 elution solutions, . For example, up to 70% of the Ti from the adsorbent beads tested with Reference 1 solution is leached after only 5 adsorption/desorption cycles. The inventors believe that this Ti leaching results in a degradation of the HTO/PVC beads, which explains the decrease of Li adsorption and desorption of Figs. 4 and 5 for these three elution solutions. However, negligible Ti leaching (below the instrument detection limit) was observed in the presence of the inventive elution solutions and low concentrated reference elution solutions, namely Reference 2 and Reference 3. This negligible Ti leaching explains the excellent Li adsorption and desorption results obtained with the inventive elution solutions and Reference 3 elution solution.

From these examples it can be concluded that the inventive elution solutions are the only ones with which a high Li adsorption to and desorption from the adsorbent beads can be obtained. Moreover, the inventive elution solutions do not impact the structure of the adsorbent beads (negligible Ti leaching ), contrary to the reference elution solutions where Ti leaching from the adsorbent beads was very high. Additionally, the buffered solution provides the advantages that the Li concentration in the solution can be significantly increased step after step, since the same elution solution can be used during multiple cycles. This will not be possible in the absence of a pH buffer, since a fast depletion of H+ will occur.

## Claims

1. A method for removing lithium from a lithium comprising solution comprising:
- contacting a lithium comprising solution with an adsorbent comprising an ion-exchange material, thereby obtaining a lithium comprising adsorbent and a lithium depleted solution, wherein the ion-exchange material comprises one or more of Ti, Mn and Zr, and
- contacting the lithium comprising adsorbent with an elution solution comprising a pH buffer solution, thereby eluting the lithium from the lithium comprising adsorbent into the elution solution, thereby obtaining a lithium comprising elution solution and the adsorbent,
**characterized in that** the pH buffer solution is configured to buffer the pH of the elution solution at a value between 1.5 and 7, preferably between 2 and 6, more preferably between 2.5 and 4.5, most preferably between 3 and 4.

2. The method according to claim 1, wherein the ion-exchange material comprises one or more of HTiO₂, H₂TiO₃, H₄Ti₅O₁₂, H₄TiO₄, H₇Ti₁₁O₂₄, H₂ZrO₄, H₂ZrO₃ or H₂ZrO₆.

3. The method according to any one of the preceding claims, wherein the ion-exchange material comprises one or more of HMnO₄, HMn₂O₄, H₂MnO₄ or H₂MnO₃.

4. The method according to any one of the preceding claims, wherein the ion-exchange material is doped with one or more of MgO, Y₂O₃, CaO and Ce₂O₃.

5. The method according to any one of the preceding claims, wherein the pH buffer solution comprises protons (H⁺), wherein the molarity of the protons in the pH buffer solution is equal to or higher than 0.001, preferably equal to or higher than 0.01, more preferably equal to or higher than 0.05 mole H⁺/L pH buffer solution.

6. The method according to any one of the preceding claims, wherein the pH buffer solution is an acidic pH buffer solution.

7. The method according to claim 6, wherein the acidic pH buffer solution comprises one or more of a hydrochloride, a phosphate, an acetate, and a citrate.

8. The method according to any one of the preceding claims, wherein the adsorbent is a particulate material.

9. The method according to claim 8, wherein the adsorbent particles have an average particle size equal to or lower than 5 mm, preferably equal to or lower than 2.5 mm, more preferably equal to or lower than 2 mm, more preferably equal to or lower than 1 mm, as measured by optical microscopy according to standard ASTM F1877-16.

10. The method according to any one of the preceding claims, wherein the adsorbent comprises a carrier material, wherein the ion exchange material is dispersed within the carrier material.

11. The method according to claim 10, wherein the carrier material is a water insoluble polymer, preferably hydrophilic polyacrylonitrile, polyvinyl butyral, polyvinyl chloride, polyurethane, polyimides, polysulfone, polysulfone ether.

12. The method according to claim 10, wherein the carrier material is a water insoluble inorganic material, preferably a clay mineral, titanium dioxide, zirconium dioxide, silica and alumina.

13. The method according to any one of claims 10 to 12, wherein the weight ratio of the ion-exchange material to the carrier material is between 1:1 and 15:1, preferably between 1:1 and 12:1, more preferably between 1:1 and 10:1.

14. The method according to any one of the preceding claims, further comprising adding an alkaline pH buffer solution to the lithium comprising solution during the contacting step.

15. The method according to any one of the preceding claims, wherein the elution solution comprises an acid having a pH between 1 and 6.

16. The method according to any one of the preceding claims, wherein the elution solution comprises an acid having a pH higher than 3 and equal to or lower than 6.
